# EUROPÄISCHE PATENTSCHRIFT

(11) **EP 0 527 496 B1**
(45) Veröffentlichungstag und Bekanntmachung des Hinweises auf die Patenterteilung: **14.05.1997**
(21) Anmeldenummer: 92113817.8
(22) Anmeldetag: 13.08.1992
(51) Int. Cl.: C09G 1/16, C14C 9/00

(54) **Behandlung von Leder mit einem Imprägnier- und Pflegemittel auf Basis flüchtiger Silikone als Lösungs- oder Dispergiermittel**
Impregnating and preserving of leather with agents based on silicons as solvents or dispersants
Imprégnation et entretien du cuir par des agents à base de silicones évaporables comme solvants ou dispersants

(30) Priorität: 14.08.1991 DE 4126975
(43) Veröffentlichungstag der Anmeldung: 17.02.1993
(73) Patentinhaber: Werner & Mertz GmbH, D-55120 Mainz (DE)
(72) Erfinder: Bücklers, Lothar, Dr., W-6501 Klein-Winterheim (DE); Zimmermann, Uwe, Dr., W-6272 Niedernhausen (DE); Krimmel, Roland, W-6502 Mainz-Kostheim (DE); Bechthold, Werner, W-6521 Hamm (DE)
(74) Vertreter: Zumstein, Fritz, Dr.

(56) Entgegenhaltungen:
- EP-A- 0 324 354
- US-A- 4 501 682

## Beschreibung

Die Erfindung bezieht sich auf die Verwendung eines flüssigen Imprägnier- und Pflegemittels für Leder.

Das erfindungsgemäß verwendete Mittel zeichnet sich dadurch aus, daß die nachstehenden imprägnierenden und gegebenenfalls pflegenden Wirkstoffe in bestimmten flüchtigen Silikonen gelöst oder dispergiert sind und mechanisch, d.h. z.B. mittels Schwammaufträger o.ä. ohne Finishschädigungen aufgetragen werden können.

### Technischer Hintergrund

Die meisten handelsüblichen Imprägniermittel für Leder, Lederersatzstoffe und Textilien beinhalten üblicherweise Fluorcarbonharze (im folgenden als "FC's" bezeichnet) als Imprägnierwirkstoff. Bei diesen Imprägniermitteln kann man prinzipiell zwischen zwei Systemen unterscheiden: Lösungsmittelsysteme, in denen die FC's in Lösungsmitteln (wie z.B. Aliphaten oder Alkoholen) gelöst sind, und Systeme, in denen der Wirkstoff in Wasser emulgiert ist.

Aus der DE-A- 34 38 645 war auch ein Imprägnierspray mit Pflegewirkung für Leder und Textilien bekannt, das neben Fluorcarbonharzen, Wasser und/oder einem mit Wasser mischbaren Lösemittel, Treibgas und gegebenenfalls Hilfsstoffen als Pflegezusatz unter anderem Silikone enthalten kann. Aufgrund ihres Einsatzes als Pflegezusatz sind hierbei als Silikone lediglich nichtflüchtige Silikone in Betracht zu ziehen. Für eine mechanische Applikation wären derartige Imprägniersprays auch bei Weglassen des Treibmittels vor allem wegen einer Finishschädigung unbrauchbar. Weiterhin beschreibt die US-A-4 501 682 Lederpflegemittel, bestehend aus Poly-(methylhydrosiloxan), Zinn/Zinkoctoat und einem Polysiloxanöl als Lösungsmittel.

### 1. Lösungsmittelsysteme

Bei den derzeit wirkungsvollsten Endverbraucherimprägniersystemen werden die FC's in aliphatischen oder alkoholischen Lösungsmitteln gelöst. Für die Applikation über mechanische Auftragssysteme, wie Schwamm oder Tuch, sind diese Systeme nicht geeignet, da die Lösungsmittel in Verbindung mit der mechanischen Auftragsweise durch Abrieb zu starken Finishzerstörungen bei Leder und Lederersatzstoffen führen. Deshalb ist für dieses System eine Applikation über Spray (Aerosolapplikation) oder Sprühpumpe notwendig, da hierdurch die Substanz kontaktlos aufgetragen wird. Trotz der kontaktlosen Applikation und damit vermiedenen Abrieb führt auch diese Applikationsart bei empfindlichen Materialien zu Finishschädigungen durch Anlösungsprozesse.

Dem unbeschränkten Einsatz von Aerosolprodukten stellt sich weiterhin ihre in den letzten Jahren aufgetretene unerwünschte physiologische Wirkung entgegen. In mehreren Veröffentlichungen wurden diese Imprägniersprays für das Auftreten von Vergiftungen im Bereich des Atemtraktes verantwortlich gemacht. Es wurde über hochgradigen Hustenreiz, Atemnot und Lungenödeme berichtet. Diese toxischen Erscheinungen traten hauptsächlich bei der Verwendung von Imprägniersprays in geschlossenen, meist unbelüfteten kleinen Räumen auf.

### 2. Wässrige Systeme

Bei den wässrigen Systemen werden die Fluorcarbonharze in emulgierter Form eingesetzt, da sich die FC's nicht direkt in Wasser lösen. Wässrige Systeme führen im Gegensatz zu Lösungsmittelsystemen nicht zu Finishzerstörungen und lassen sich damit problemlos über mechanische Applikationssysteme, wie Schwamm, Filz oder Tuch auftragen.

Durch die notwendigen Emulgatoren besitzen die wässrigen Imprägniersysteme jedoch eine sehr beschränkte Wirksamkeit.

### Erfindungsgegenstand

Der Erfindung liegt daher die Aufgabe zugrunde, eine Verwendung eines flüssigen Imprägnier- und Pflegemittels zur Imprägnierung und gegebenenfalls Pflege von Leder zu entwickeln, bei der die positiven Eigenschaften der in 1. und 2. beschriebenen Systeme zum tragen kommen, ohne die erwähnten negativen Aspekte, wie die Notwendigkeit von Sprayapplikation, Finishzerstörungen bzw. ungenügende Wirksamkeit, in Kauf nehmen zu müssen.

Erfindungsgemäß wird diese Aufgabe durch die Verwendung eines flüssigen Imprägniermittels gelöst, das die nachstehenden imprägnierenden und gegebenenfalls pflegenden Substanzen in bestimmten flüchtigen Silikonen als Hauptlösungs- bzw. Hauptdispergiermittel enthält.

Gegenstand der Erfindung ist die Verwendung eines flüssigen Imprägnier- und Pflegemittels zur Imprägnierung und gegebenenfalls Pflege von Leder durch mechanische sprühnebelfreie Applikation, enthaltend
a) einen Imprägnierwirkstoff, der unter Fluorcarbonharzen und/oder Fluorsilikonen ausgewählt ist,
b) als Lösungs- oder Dispergiermittel 10 bis 95 Gew.-% eines flüchtigen Silikons, ausgewählt aus den nachstehend unter B. definierten flüchtigen Silikonen, sowie
c) gegebenenfalls übliche Pflege- und Hilfsmittel.

Überraschenderweise wurde festgestellt, daß die flüchtigen Silikone, in dem verwendeten Mittel als Lösungs- oder Dispergiermittel eingesetzt, bei mechanischer Applikation über Schwamm, Filz, Dispenser oder Tuch (ebenso wie wässrige Imprägniermittelsysteme) zu keinen Finishschädigungen führen.

Weiterhin wurde überraschenderweise festgestellt, daß sich sehr unterschiedliche Imprägnierwirkstoffe und in deren Lösungen auch Pflegekomponenten wie nicht-flüchtige Silikone bzw. Farbstoffe einarbeiten lassen. Dies stellt die Grundlage dafür dar, Imprägnierwirkstoffe auf Basis flüchtiger Silikone als Lösungs- oder Dispergiermittel formulieren zu können, mit dem Vorteil, daß sich diese mittels mechanischer Applikation sprühnebelfrei auf das zu pflegende Objekt aufbringen lassen.

Das verwendete Mittel kann in Form einer Lösung oder, insbesondere bei Anwesenheit von pflegewirksamen Substanzen, als Dispersion vorliegen.

Im folgenden wird eine Beschreibung der Inhaltsstoffe gegeben.

Die Prozentangaben beziehen sich im Folgenden und im Vorangegangenen sowie auch in den Patentansprüchen, sofern nicht anders angegeben, auf das Gewicht der Gesamtzusammensetzung des verwendeten Mittels.

### A. Imprägnierwirkstoffe

### 1. Imprägnierende Fluorcarbonharze

Die für die Zwecke der Erfindung geeigneten Fluorcarbonharze lassen sich wie folgt charakterisieren:

Unter Fluorcarbonharzen sind Substanzen zu verstehen, wie sie allgemein für die imprägnierende Ausrüstung von Leder und Textilien bekannt sind und im Handel angeboten werden.

Innerhalb der bekannten imprägnierenden Fluorcarbonharze kommen für die vorliegende Erfindung insbesondere die in Benzinen bzw. Alkanen oder in Alkoholen (z.B. i-Propanol) löslichen in betracht. Im Zusammenhang mit den genannten imprägnierenden Fluorcarbonharzen sind für die Zwecke der Erfindung ferner insbesondere die folgenden Perfluoralkylverbindungen zu nennnen: langkettige Perfluorcarbonsäuren, Perfluoralkylsulfonamide, Perfluoralkylurethane, Perfluoralkylverbindungen mit salzbildenden Aminogruppen, Perfluoralkylester, Perfluoralkylacrylate, soweit sie in Alkanen, Benzin oder Alkoholen löslich sind.

Beispiele solcher Alkan-(Benzin-) oder alkohollöslicher Fluorcarbonharze, die mit dem bei der Erfindung eingesetzten Lösungsmittel auf Basis flüchtiger Silikone mischbar sind, sind im folgenden mit Handelsnamen und Hersteller genannt:

Foraperle B 208, Foraperle 200, Foraperle 215, Foraperle 222 und Foraperle 244 (Handelsprodukte von Atochem); FX 3530, Handelsprodukt von 3M (Festsubstanzgehalt 40 Gew.-% in Testbenzin); LZ 12 108, Handelsprodukt von 3 M.

Herstellungsbedingt können diese Fluorcarbonharze folgende konventionelle Lösungsmittel enthalten: gesättigte Alkane, Benzine, Alkohole, Ketone, Ester, Ether, wie z.B. Heptan, Testbenzin, Ethylalkohol, Isopropanol, Butanol, Aceton, Methylethylketon, Ethylacetat, Butylacetat, Dimethylether, Diethylether.

### 2. Fluor und Polysiloxangruppen enthaltende Urethane (Fluorsilikone)

Bei diesen Verbindungen handelt es sich um Substanzen, wie in der EP-A-298 364 beschrieben, deren Offenbarung hinsichtlich der dortigen Urethane der Formel (1) (vgl. den dortigen Patentanspruch 1) vorliegend durch Bezugnahme umfaßt ist. Die allgemeinen Strukturformeln derartiger Verbindungen sind in der oben genannten EP-A-298 364 in den Seiten 2-4 beschrieben. Insbesondere sind solche Substanzen geeignet, wie sie in den Beispielen 1-13 auf den Seiten 11-14 beschrieben sind. Die Seiten 2 bis 4 und 11 bis 14 dieser EP-A-298 364 sind nachstehend in Form der Anlage 1 wiedergegeben. Für die Herstellung des verwendeten Mittels können diese Verbindungen zweckmäßig in Form ihrer Lösungen, z.B. als bis zu 50%ige, vorzugsweise als bis zu 30%-ige Lösung eingesetzt werden. Lösungsmittel können hierbei Alkohole, Ketone, Ester, Aliphaten sein, wie beispielsweise Ethanol, Isopropanol, Methylethylketon, Aceton, Butylacetat, Ethylacetat, Testbenzin oder n-Heptan.

Die genannten Imprägnierwirkstoffe 1. und 2. können einzeln oder in Kombination in dem vorliegenden Mittel verwendet werden. Ihre jeweilige Menge kann bis zu 20 Gew.-%, im allgemeinen bis zu 10 Gew.-%, vorzugsweise 0,1 bis 5 Gew.-% und insbesondere von 1 bis 3 Gew.-% betragen. Die angegebenen Prozentbereiche beziehen sich auf den Aktivsubstanz- bzw. Feststoffgehalt der genannten Imprägnierwirkstoffe (also ohne einen etwaigen herstellungsbedingten Lösungsmittelgehalt) in dem verwendeten Mittel.

### B. Flüchtige Silikone (Lösungs- bzw. Dispergiermittel)

Bei dem für das vorliegende Mittel verwendeten Lösungs- bzw. Dispergiermittel handelt es sich um flüchtige Silikone. Diese zeichnen sich im Vergleich zu nichtflüchtigen Silikonen durch eine vollständige, rückstandslose Verdunstung aus. Die Verdunstungszahlen für die vorliegend eingesetzten flüchtigen Silikone, bestimmt nach DIN 53170, betragen vorzugsweise weniger als 600 und insbesondere weniger als 100. Die vorliegend eingesetzten Silikone umfassen folgende Substanzklassen:

### 1. Lineare Polydimethylsiloxane der folgenden allgemeinen Strukturformel

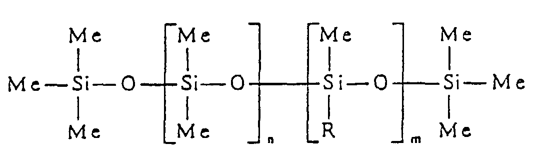

worin Me = -CH₃;
n = 0, 1, 2, 3, 4, 5, 6, 7 oder 8 und/oder m = 0, 1, 2, 3, 4, 5, 6, 7 oder 8, respektive n + m = 0, 1, 2, 3, 4, 5, 6, 7 oder 8.
R = Alkyl (C₂-C₈ insbesondere C₂-C₄), Aryl (insbesondere Phenyl), Hydroxyalkyl (C₁-C₈).

Diese Silikone zeichnen sich durch eine niedrige Oberflächenspannung und rückstandslose Verdunstung bei sehr niedriger Verdunstungswärme aus.

Sie besitzen beispielsweise folgende Eigenschaften:

| | |
|---|---|
| Viskositätsbereich = | 0,65 - 10 mm²/s (25°C) |
| Molekulargewicht = | 160 - 1200 |

Insbesondere handelt es sich um niederviskose, klare, farblose Produkte. Als Beispiele solcher linearer Polydimethylsiloxane seien folgende Handelsprodukte genannt: AK 065 (Wacker) und DC 200-0,65 (Dow Corning).

### 2. Cyclische Silikone der allgemeinen Strukturformel

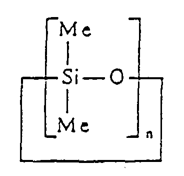

worin Me = -CH₃ und
wobei n = 3, 4, 5, 6 oder 7, bevorzugt n = 4
Derartige Silikone zeichnen sich zumeist ebenfalls durch niedrige Oberflächenspannung und rückstandslose Verdunstung bei sehr niedriger Verdunstungswärme aus. Insbesondere besitzen die cyclischen Silikone folgende Merkmale:

| | |
|---|---|
| Viskositätsbereich = | 2 - 6 mm²/s (25°C) |
| Molekulargewicht = | 220 - 520 |

Beispielhaft für solche cyclischen Silikone seien hier genannt: Abil K 4 (Tego-Goldschmidt AG), Z 020 (Wacker) und DC 344 Fluid (Dow Corning).

### 3. Mischungen der unter 1. und 2. beschriebenen flüchtigen Silikone:

Auch Mischungen der unter 1. und 2. beschriebenen flüchtigen Silikone können in dem Mittel als Lösungs- oder Dispergiermittel verwendet werden.

Das verwendete Mittel kann die flüchtigen Silikone in einer Menge von 10 bis 95 Gew.-%, insbesondere von 70 bis 95 Gew.-% enthalten. Zusammen mit den flüchtigen Silikonen können auch noch weitere Lösungs- bzw. Dispergiermittel in einer Menge von höchstens bis zu 30 Gew.-%, bezogen auf die Gesamtzusammensetzung, und insbesondere in einer Menge von 0,1 bis zu 20 Gew.-%, insbesondere bevorzugt bis zu 10 Gew.-%, am bevorzugsten bis zu 7 Gew.-%, enthalten sein. Bei diesen weiteren Lösungs- bzw. Dispergiermitteln kann es sich insbesondere um aliphatische Lösungsmittel (wie z.B. n-Heptan, Testbenzin) oder um Alkohole (wie z.B. Ethanol, Isopropanol) handeln.

### C. Plege- und Hilfsmittel

Die Anwendung von Imprägniermitteln ist für eine komplette Pflege von Leder bisweilen nicht ausreichend. Um das gute Aussehen der Ledergegenstände zu bewahren, ist es oft notwendig, sie weich und geschmeidig zu erhalten und vor Rissigwerden und vorzeitiger Alterung zu schützen; auch ist es nötig, äußerliche Abriebstellen und Verletzungen, die bei der täglichen Beanspruchung auftreten können, zu reparieren. Glänzende Leder benötigen außerdem glanzgebende Pflegesubstanzen. In einigen Fällen müssen den Ledern außer imprägnierenden und pflegenden Bestandteilen auch Farbstoffe zugeführt werden, die ebenfalls in die erweiterten Rezepturen eingearbeitet werden können.

Als Pflege- und Hilfskomponenten kommen dabei in Betracht:
1. Wachse (z.B. Naturwachse, modifizierte Montanwachse, PE-Wachse und Paraffinwachs)
2. nicht flüchtige Silikone
   2.1. Polydimethylsiloxan, unter anderem auch Alkyl / Aryl / Alkoxy-substitiuierte Polydimethylsiloxane
      Viskosität: 10 - 1.000.000 mm²/s
   2.2. OH-endständige Polydimethylsiloxane
      Viskosität: 50 - 10.000.000 mm²/s
   2.3. Phenylsiloxane, insbesondere mit niedrigem Phenylsubstituierungsgrad
      Viskosität: 4 - 1300 mm²/s
   2.4. nicht vernetzungsfähige und vernetzungsfähige aminofunktionelle Silikonöle
      Viskosität: 5 - 10.000 mm²/s
3. Öle und Fette (z.B. Trane, Lanolin, Lederöle)
4. Farbstoffe (z.B. gelöste Farbstoffe, organische und anorganische Pigmentfarbteige, anorganische und organische Farbpigmente)
5. übliche weitere Zusätze, wie z.B. Parfüm

Herstellungsbedingt können diese Substanzen konventionelle Lösungsmittel, wie Benzine, Alkohole etc. enthalten.

Die Menge der Pflege- und Hilfsmittel C kann im Fall der unter 1. und 3. genannten Komponenten 0 bis 30 Gew.-%, insbesondere 0 bis 15 Gew.-%, im Fall der unter 4. und 5. genannten Komponenten 0 bis 10 Gew.-%, und insbesondere 0 bis 5 Gew.-% betragen. Die Menge der Komponente 2 kann von 0 bis 40 Gew.-%, vorzugsweise 0 bis 20 Gew.-% betragen.

Die vorliegenden Mittel gelangen durch mechanische Applikation, d.h. sprühnebelfrei zur Anwendung. Applikationsarten sind hierbei:
1. Entnahme des Imprägniermittels aus einer normalen Flasche mit Tuch, Schwamm oder ähnlichem und Verreiben auf dem zu imprägnierenden bzw. pflegenden Teil.
2. Auftragen bzw. Verreiben des Imprägniermittels über den in der Lederpflege üblichen Schwamm-, Filz- bzw. Tuchaufträger oder Dispenser. Bei dieser Applikationsart ist der Behälter für das imprägniermittel bereits mit dem Aufträger ausgestattet.
3. Autrag über ein Kapillarbürstensystem.

Überraschenderweise zeigte sich, daß das vorliegende Mittel für alle Lederarten universell geeignet ist. Damit eignet sich das erfindungsgemäße Mittel zur Behandlung von Lederschuhen, Lederbekleidung und Ledermöbeln.

Mit dem vorliegenden Mittel lassen sich die genannten Vorteile ohne Finishschädigung erzielen. Dies gilt auch, wenn herstellungs- oder formulierungstechnisch bedingt oder aus sonstigen Gründen konventionelle Lösungsmittel mit enthalten sind. So können in Einzelfällen in dem erfindungsgemäßen Mittel bis zu 30 Gew.-% konventionelle Lösungsmittel enthalten sein, ohne daß eine Finishschädigung eintritt. Im allgemeinen liegt der Anteil an konventionellem Lösungsmittel bei höchsten 10, insbesondere bei höchstens 7 Gew.-%.

### Allgemeine Herstellungsvorschrift

Die Imprägnierwirkstoffe werden unter Rühren in das Lösungsmittel (flüchtige Silikone), gegebenenfalls in der Wärme, eingerührt. Etwaige Lösungsvermittler (zwischen Imprägnierwirkstoff und dem eigentlichen Lösungsmittel), soweit sie nicht zusammen mit dem Imprägnierwirkstoff selbst eingebracht werden, werden noch vor Zusatz des Imprägnierwirkstoffs mit flüchtigen Silikonen gemischt. Insbesondere bei den Fluorcarbonharzen empfiehlt es sich, einen Lösungsvermittler, in diesem Fall Alkane bzw. Benzine oder Alkohole, zu verwenden. Der Rührprozeß wird bis zum Erreichen einer klaren Lösung beibehalten. Zusatzstoffe, wie Pflegekomponenten und/ oder Hilfsstoffe werden anschließend unter leichtem Rühren zugefügt.

Herstellungsbedingt, z.B. durch Lösungsvermittlung zwischen Imprägnierwirkstoff und flüchtigen Silikonen oder durch Lösungsmittel in den eingesetzten Rohstoffen, wie Pflege- und Hilfsmittel und/oder Imprägnierwirkstoffen, kann das vorliegende Imprägniermittel wie gesagt bis zu 30 Gew.-% konventioneller Lösungsmittel enthalten, insoweit als die positiven Eigenschaften des Imprägniermittels (vor allem keine Finishschädigung bei mechanischem Auftrag) hierdurch nicht nennenswert beeinträchtigt werden. Derartige konventionelle Lösungsmittel sind insbesondere Alkohole, Ketone, Ester und Aliphaten, beispielsweise Ethanol, Isopropanol, Methylethylketon, Aceton, Butylacetat, Ethylacetat, Testbenzin oder n-Heptan. Im allgemeinen beträgt die Beimengung konventioneller Lösungsmittel bis zu 10 Gew.-% und insbesondere bis zu 7 Gew.-%.

### Rezepturbeispiele

### Beispiel 1:

| | |
|---|---|
| flüchtiges Silikon (AK 0.65 (Wacker)) | 80,00 % |
| Fluorcarbonharz (FX 3530 (3M)) | 8,00 |
| Testbenzin | 12,00 |

### Herstellungsvorschrift:

Silikonöl AK 0.65 wird vorgelegt und bei Raumtemperatur erfolgt unter starkem Rühren die Zugabe von Testbenzin. Anschließend wird FX 3530 unter Rühren zugegeben.

### Beispiel 2:

| | |
|---|---|
| flüchtiges Silikon (DC 344 Fluid (Dow Corning)) | 92,00 % |
| Fluor und Polysiloxan enthaltendes Urethan (Hoe L 3913, 30%ig in üblichem Lösungsmittelgemisch (Hoechst)) | 8,00 |

### Herstellungsvorschrift:

DC 344 Fluid und Hoe L 3913 werden jeweils getrennt auf 50°C erwärmt. Nach Erreichen der Solltemperatur werden beide Komponenten zusammengerührt und auf Raumtemperatur unter Rühren abgekühlt.

### Beispiel 3:

| | |
|---|---|
| flüchtiges Silikon (DC 200 Fluid (0,65 mm²·s⁻¹) (Dow Corning)) | 73,00 % |
| Fluorcarbonharz (Foraperle B 208 (Atochem)) | 22,00 |
| Pflegekomponente (Bienenwachs) | 1,50 |
| nichtflüchtiges Polydimethylsiloxan (Baysilon M 500 (Bayer)) | 3,50 |

### Herstellungsvorschrift:

Foraperle B 208 wird auf 60°C erhitzt, darin das Bienenwachs unter Rühren gelöst und anschließend erfolgt die Zugabe des DC 200 Fluid (0,65). Nach Abkühlen auf Raumtemperatur erfolgt unter Rühren die Zugabe des Baysilon M 500.

### Beispiel 4:

| | |
|---|---|
| flüchtiges Silikon (Abil K 4 (Tego-Goldschmidt AG)) | 88,30 % |
| Fluor und Polysiloxan enthaltendes Urethan (Hoe L 3913, 30%ig (Hoechst)) | 7,00 |
| nichtflüchtiges Phenylsiloxan (Baysilon PH 300 (Bayer)) | 4,70 |

### Herstellungsvorschrift:

Abil K 4 und Hoe L 3913 werden jeweils getrennt auf 50°C erwärmt. Nach Erreichen der Solltemperatur werden beide Komponenten zusammengerührt und auf Raumtemperatur abgekühlt. Unter Rühren erfolgt danach die Zugabe des Baysilon PH 300.

### Beispiel 5 (Anwendungsbeispiele):

Die Mittel mit den in den Beispielen 1 bis 4 aufgeführten Rezepturen wurden an verschiedenen Ledern und Lederschuhen auf Finishechtheit geprüft. Bei diesen Überprüfungen wurden die Rezepturen mechanisch (mittels Schwammaufträger) appliziert.

### a) Leder

Folgende Leder der Bezugsquelle Fa. Schmenger, Pirmasens, wurden untersucht: Brush-off-Leder, Art.Nr.: Indios-Iz Fabrikat 5403 Farbe 160; chromgegerbtes Glattleder, Art.Nr.: Driver G.R., Fabrikat 4605; blaues Kalbvelour, Fabrikat 5104, Farbe Pazific 1821 und rotes Nubuk, Fabrikat 5401 Farbe NZ 7.

Bei Anwendung der Mittel gemäß den Bespielen 1 bis 4 wurde bei keinem dieser Ledertypen eine Finishschädigung beobachtet.

### b) Lederschuhe

Weiterhin wurden die Rezepturbeispiele 1 und 2 am Endprodukt, nämlich an Lederschuhen getestet. Hierbei wurden Schuhe aus unterschiedlichen Lederkombinationen geprüft, nämlich Altsilber/Glattlederkombination (Fa. Gabor International) Art.Nr.: 21.835.27; Brush-off-Leder bordo (Fa. Gabor International) Art.Nr. 31.425.65 und Lack/Nappa-Kombination/schwarz (Fa. Kennel & Schmenger) Art.Nr.: 2-3134.

Auch hier wurde bei der mechanischen Applikation der vorliegenden Mittel keine Finishschädigung beobachtet.

## Patentansprüche

1. Verwendung eines flüssigen Imprägnier- und Pflegemittels zur Imprägnierung und gegebenenfalls Pflege von Leder durch mechanische sprühnebelfreie Applikation, enthaltend
a) einen Imprägnierwirkstoff, der unter Fluorcarbonharzen und oder Fluorsilikonen ausgewählt ist,
b) als Lösungs- oder Dispergiermittel 10 bis 95 Gew.-% eines flüchtigen Silikons, ausgewählt aus
1. Linearen Polydimethylsiloxanen der allgemeinen Formel 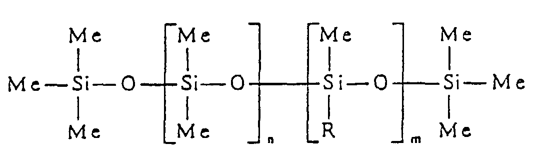 worin Me = -CH₃;
n = 0, 1, 2, 3, 4, 5, 6, 7 oder 8 und/oder m = 0, 1, 2, 3, 4, 5, 6, 7 oder 8, respective n + m = 0, 1, 2, 3, 4, 5, 6, 7 oder 8; und
R = C₂-C₈-Alkyl, Aryl, insbesondere Phenyl, oder C₁-C₈-Hydroxyalkyl; und
2. Cyclischen Silikonen der allgemeinen Formel 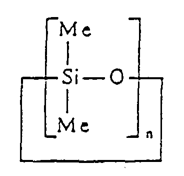 worin Me = -CH₃ und
n = 3, 4, 5, 6 oder 7;
sowie
3. Mischungen der unter 1. und 2 angegebenen Silikone sowie
c) gegenenfalls übliche Pflege- und Hilfsmittel.

2. Verwendung eines Mittels gemäß Anspruch 1, enthaltend bis zu 20 Gew.-% Fluorcarbonharze.

3. Verwendung eines Mittels gemäß Anspruch 1, enthaltend bis zu 10 Gew.-% Fluorsilikone.

4. Verwendung eines Mittels gemäß Anspruch 1, enthaltend bis zu 20 Gew.-% von Mischungen der Imprägnierwirkstoffe gemäß Anspruch 2 und 3.

5. Verwendung eines Mittels gemäß Anspruch 1 mit üblichen Hilfs-und Pflegemitteln, enthaltend bis zu 40 Gew.-% nicht flüchtiges Silikon mit einer Viskosität zwischen 50 und 10 000 000 mm²/s.

6. Verwendung eines Mittels gemäß Anspruch 1, enthaltend bis zu 40 Gew.-% eiens Polydimethylsiloxans mit einer Viskosität von 10 bis 1 000 000 mm²/s.

7. Verwendung eines Mittels nach Anspruch 1, enthaltend bis zu 30 Gew.-% Öle, Fette und/oder Wachse.

8. Verwendung eines Mittels nach Anspruch 1, enthaltend bis zu 10 Gew.-% Farbstoffe.

9. Verwendung eines Mittels nach Anspruch 1, enthaltend bis zu 10 Gew.-% Parfum.

## Claims

1. Use of a liquid impregnating agent and polish for impregnating and possibly polishing leather by mechanical application free from spray mist, containing
a) an active impregnating agent selected from fluorocarbon resins and fluorosilicones,
b) as a solvent or dispersing agent, 10 to 95 wt.% of a volatile silicone, selected from
1. linear polydimethylsiloxans of the general formula 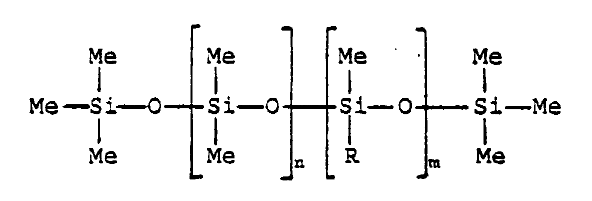 wherein Me = -CH₃;
n = 0, 1, 2, 3, 4, 5, 6, 7 or 8 and/or m = 0, 1, 2, 3, 4, 5, 6, 7 or 8, or n + m = 0, 1, 2, 3, 4, 5, 6, 7 or 8; and
R = C₂-C₈ alkyl, aryl, particularly phenyl, or C₁-C₈ hydroxyalkyl; and
2. cyclic silicones of general formula 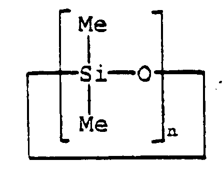 wherein Me = -CH₃ and
n = 3, 4, 5, 6 or 7;
and
3. mixtures of the silicones specified in 1. and 2. and
c) optionally conventional polishes and adjuvants.

2. Use of an agent according to claim 1 containing up to 20 wt.% of fluorocarbon resins.

3. Use of an agent according to claim 1, containing up to 10 wt.% of fluorosilicones.

4. Use of an agent according to claim 1, containing up to 20 wt.% of mixtures of the active impregnating agents according to claims 2 and 3.

5. Use of an agent according to claim 1 with conventional adjuvants and polishes, containing up to 40 wt.% of non-volatile silicone with a viscosity of between 50 and 10,000,000 mm²/s.

6. Use of an agent according to claim 1, containing up to 40 wt.% of a polydimethylsiloxane having a viscosity of from 10 to 1,000,000 mm²/s.

7. Use of an agent according to claim 1, containing up to 30 wt.% of oils, greases and/or waxes.

8. Use of an agent according to claim 1, containing up to 10 wt.% of dyes.

9. Use of an agent according to claim 1, containing up to 10 wt.% of perfume.

## Revendications

1. Utilisation d'un agent liquide d'imprégnation et de traitement destiné à l'imprégnation et éventuellement au traitement des cuirs par application mécanique sans pulvérisation ou nébulisation, contenant :
a) un principe actif d'imprégnation qui est choisi parmi les résines de fluorocarbone et/ou parmi les fluorosilicones,
b) comme agent de solution ou de dispersion 10 à 95 % en poids d'un silicone volatil choisi à partir de
1. Polydiméthylsiloxanes linéaires de la formule générale 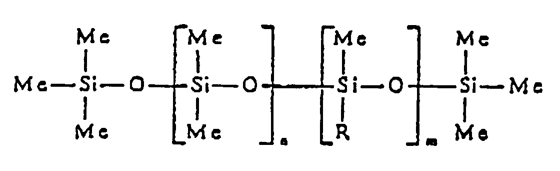 dans laquelle Me = -CH₃ ;
n = 0, 1, 2, 3, 4, 5, 6, 7 ou 8 et/ou m = 0, 1, 2, 3, 4, 5, 6, 7 ou 8 respectivement n + m = 0, 1, 2, 3, 4, 5, 6, 7 ou 8 ; et
R = alkyle C₂-C₈, aryle, en particulier phényle, ou hydroxyalkyle en C₁-C₈ ; et
2. Silicones cycliques de la formule générale 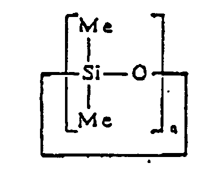 dans laquelle Me = -CH₃ et
n = 3, 4, 5, 6 ou 7 ;
ainsi que
3. Mélanges des silicones indiqués en 1 et 2
ainsi que
c) éventuellement les agents auxiliaires et de traitement habituels.

2. Utilisation d'un agent selon la revendication 1, contenant jusqu'à 20 % en poids de résine de fluorocarbone.

3. Utilisation d'un agent selon la revendication 1, contenant jusqu'à 10 % en poids de fluorosilicone.

4. Utilisation d'un agent selon la revendication 1, contenant jusqu'à 20 % en poids de mélanges de principe actif d'imprégnation selon les revendications 2 et 3.

5. Utilisation d'un agent selon la revendication 1, avec les agents auxiliaires et de traitement usuels, contenant jusqu'à 40 % en poids de silicone non volatil d'une viscosité entre 50 et 10 000 000 mm²/s.

6. Utilisation d'un agent selon la revendication 1, contenant jusqu'à 40 % en poids d'un polydiméthylsiloxane d'une viscosité de 10 et 1 000 000 mm²/s.

7. Utilisation d'un agent selon la revendication 1, contenant jusqu'à 30 % en poids d'huile, de graisse et/ou de cire.

8. Utilisation d'un agent selon la revendication 1, contenant jusqu'à 10 % en poids de colorant.

9. Utilisation d'un agent selon la revendication 1, contenant jusqu'à 10 % en poids de parfum.
